# EUROPEAN PATENT SPECIFICATION

(11) **EP 3 503 494 B1**
(45) Date of publication and mention of the grant of the patent: **24.03.2021**
(21) Application number: 17210410.1
(22) Date of filing: 22.12.2017
(51) Int. Cl.: H04L 29/06, H04L 29/08, H04W 4/70

(54) **SECURITY SYSTEM AND SECURITY METHOD FOR A DATA NETWORK AND FOR TERMINAL DEVICES CONNECTED TO THE DATA NETWORK**
SICHERHEITSSYSTEM UND SICHERHEITSVERFAHREN FÜR EIN DATENNETZWERK UND MIT DEM DATENNETZWERK VERBUNDENE ENDGERÄTEVORRICHTUNGEN
SYSTÈME DE SÉCURITÉ ET PROCÉDÉ DE SÉCURITÉ POUR UN RÉSEAU DE DONNÉES ET POUR LES DISPOSITIFS DE TERMINAL RELIÉS AU RÉSEAU DE DONNÉES

(43) Date of publication of application: 26.06.2019
(73) Proprietor: Deutsche Telekom AG, 53113 Bonn (DE)
(72) Inventor: BRITSCH, Matthias, 53639 Königswinter (DE)
(74) Representative: Raible Deissler Lehmann Patentanwälte PartG mbB

(56) References cited:
- US-A1- 2016 212 099
- Daniel Sorensen ET AL: "IoTsec Automatic Profile-based Firewall for IoT Devices", , 7 June 2017 (2017-06-07), pages 1-112, XP55474530, Retrieved from the Internet: URL:http://projekter.aau.dk/projekter/file s/260081086/report_print_friendly.pdf [retrieved on 2018-05-14]
- IBBAD HAFEEZ ET AL: "Toward Secure Edge Networks: Taming Device-to-Device (D2D) Communication in IoT", ARXIV.ORG, CORNELL UNIVERSITY LIBRARY, 201 OLIN LIBRARY CORNELL UNIVERSITY ITHACA, NY 14853, 16 December 2017 (2017-12-16), XP080846683,
- NHU-NGOC DAO ET AL: "Securing Heterogeneous IoT with Intelligent DDoS Attack Behavior Learning", ARXIV.ORG, CORNELL UNIVERSITY LIBRARY, 201 OLIN LIBRARY CORNELL UNIVERSITY ITHACA, NY 14853, 16 November 2017 (2017-11-16), XP080837766,

## Description

The present invention refers to a security system for a data network and for terminal devices coupled to the data network by using machine learning and artificial intelligence. Further, a respective security method for securing a data network and terminal devices coupled to the data network is provided.

With the rise of the Internet-of-Things (loT), the number of active devices connected to data networks is increasing dramatically. In the context of the present invention, there are some properties which are highly relevant and also most prominent in loT devices. Naturally all loT devices have a limited bandwidth and a limited processing power. In some cases, the firmware of the loT devices cannot be updated due to a minimalistic hard- and software design. Further, a significant share of loT devices is running on battery power. Data which is produced by loT devices is dependent on a geographical or physical deployment of the respective loT devices, e.g. in case of sensors. Accordingly, the communication patterns which are used by the loT devices depend highly on the respective usage scenario. In most cases, the deployment is performed independently from the respective operators. Those and other new properties open up new attack vectors. The devices can be physically moved. Thus, a temperature sensor which is moved will probably produce misleading data. Further, the devices can be attacked by making use of legitimately available services, e.g. batteries can be drained by repeated connection attempts. Missing firmware management capabilities prevent fixing of unveiled security bugs. Insufficient processing power makes it impossible to run firewalling on the loT devices themselves. Scarce bandwidth allows DoS (Denial of Service) style attacks.

As these threats cannot be prevented on the devices themselves without putting them at risk or damage them, e.g. by draining their battery, they have to be prevented inside the data network. However, classical firewall technology as available today, is based on knowledge about the assets which are to be protected and requires pre-emptive knowledge about the respective devices.

The document "loTsec Automatic Profile-based Firewall for loT Devices" of Daniel Sorensen et al. describes a system that generates device-specific profiles which provide information about the traffic to and from each loT device connected to an interface gateway device. When the learning phase has ended, the set of firewall rules is generated for each device and loaded into a respective firewall.

Due to the amount of devices and their properties, it is not possible with realistic operational effort, to gather the respective information, to translate it into firewalling rules and to update the devices in accordance with the changes on the device side, e.g. physical movement of the device.

Although the above-mentioned properties are specific to loT devices, there are also other assets in a data network which are to be protected, e.g. home gateways and customer owned devices connected to their home networks, servers connected inside a network itself or any other traffic endpoint.

In order to cover all traffic paths which can be exploited to create an attack vector, a control point has to be implemented at the network edge. In specific, the control point is to be implemented at the first point which is not only reachable by the to be protected asset itself. Any location of the control point on a node which can be bypassed by another network path, would offer reachability and, given the limited performance of the devices, enable the creation of an attack vector. For more powerful devices the same attack vector would be more easily defendable, but attacks will still be possible. Hence, the object of the present invention is to provide a possibility for securing a data network together with all devices and items connected to the data network from a potential attack.

A system with the features of claim 1 and a method with the features of claim 12 are presented. Further embodiments are indicated in the respective dependent claims and in the following description.

The present invention is directed to a security system for a data network and for terminal devices coupled to the data network, wherein the data network comprises a network topology of a plurality of network data plane nodes which are interconnected which each other wirelessly or wired. The proposed security system is built-up hierarchically and implemented in the network topology. The security system comprises at least:
- at least one network edge node (NEN), which is particularly located at a logically defined and/or physical access node of the data network, and configured to log information about data traffic and/or to extract/generate traffic profiles from data traffic within the data network;
- at least one first level analysis node (FLAN) which is connected to the at least one network edge node and configured to receive the generated traffic profiles, to apply a first learning algorithm to the traffic profiles, to store the learned traffic profiles locally and to forward at least some of the learned traffic profiles to at least one second level analysis node (SLAN);
- the at least one second level analysis node (SLAN) which is connected to the at least one first level analysis node (FLAN) and to at least one first logically centralized entity (CRS) and configured to receive the learned traffic profiles from the at least one first level analysis node (FLAN) and to evaluate, particularly by applying a second learning algorithm, the received learned traffic profiles;
- the at least one first logically centralized entity (CRS) which is configured to store rules which assign certain traffic profiles to respective actions, respectively, and to distribute, whenever the at least one second level analysis node receives one of the certain traffic profiles from the at least one first level analysis node with a preconfigured frequency, respective rules to the at least one second level analysis node which forwards the respective rules to the at least one first level analysis node for triggering execution of at least one action assigned to the one of the certain traffic profiles received from the at least one first level analysis node.

The invention is highly relevant in a context of Internet-of-Things devices but technically not limited to those devices. In its technical applicability the invention is generic and can be implemented at any place in the network topology. For business and operational reasons, the focus is on the traffic access and due to the expected growth in loT devices, the scope is expected to gravitate towards them. The at least one network edge node can be positioned at any logically defined access node, which can be located inside the data network, but which provides, from the point of view of any client, an access to the data network. A PPP (Point-to-Point Protocol) tunnel endpoint or a GTP (GPRS Tunneling Protocol) tunnel endpoint can be positioned inside a data network and offer an access to the data network for any client.

Generally, the at least one network edge node is implemented as a function on an already existing data plane node of the data network. However, it is also possible that the at least one network edge node is implemented as a stand-alone node within the data network. The at least one network edge node can be implemented on a data plane node, generally on a physical network node which is an active electronic or optical device that is attached to the data network, and is capable of creating, receiving or transmitting information over a communication channel, i.e. it is located within a data communication path at the data network.

Generally, the at least one network edge node is further configured to execute the at least one action.

According to a further embodiment, the proposed system comprises at least one data extraction node which is implemented on an already existing network plane node or on a stand-alone node and configured to log information about data traffic and to generate traffic profiles or to transfer the logged information to at least one network edge node which generates traffic profiles from the logged information about the data traffic. Generally, such a data extraction node is not configured to execute the at least one action. Such a data extraction node could be, for example, a glass fibre or an electrical cable probe.

Not before the at least one second level analysis node receives one of the certain profiles from the at least one first level analysis node with a predefined frequency, the respective rules are applied. Thereby, a predefined frequency can mean a one-time occurrence or a successive multiple occurrence of the respective one of the certain profiles.

According to a possible embodiment of the proposed system, the at least one second level analysis node is further configured to generate aggregated traffic profiles on the basis of the received learned traffic profiles.

According to a further embodiment of the proposed system the at least one first level analysis node and/or the at least one second level analysis node are/is further configured to take decisions about any action which is to be executed based on a detected traffic profile That means that both analysis nodes are configured to trigger the execution of a specific action as soon as a traffic profile assigned to that specific action has been received from at least one lower level node and in the event that a further additional configurable condition is fulfilled. Such a condition can be, for example, a predefined frequency with which a respective traffic profile is detected, an absolute number of the occurrence of such a traffic profile, a topological and/or geographical assignment, an assignment to specific devices and/or customers, or any combination thereof. However, these actions are only performed by the network edge nodes as those nodes are located on the communication layer, i. e. on the data plane, particularly within respective communication paths/tunnels.

The security system has a tree structure, wherein the first logically centralized entity (CRS) represents the root. Starting from the root (CRS), the structure branches, wherein each branch comprises several layers of nodes, i.e. at least the second level analysis nodes and the first level analysis nodes and the layer of network edge nodes. The at least one first level analysis node and the at least one second analysis node represent an analysis section of the security system, i.e. those nodes/layers which analyse and evaluate the data traffic, i.e. the received traffic profiles. This analysis section of the security system can be iteratively extended as needed. Thereby, the number of first level analysis nodes and/or the number of second analysis nodes can be varied, particularly increased, and/or the number of layers of the analysis section can be increased, meaning that the system is extended by at least one further layer represented by at least one third level analysis node, etc. How the security system is extended, i.e. whether the number of nodes within one layer or the number of layers is increased, is dependent on the actual needs, e.g. further in-depth analysis, more capacity, broader network coverage, etc. Thereby, the number of layers can vary in each branch of the tree structure. The traffic profiles which are passed on within the tree structure are progressively aggregated from the first level analysis nodes to the second level analysis nodes to potentially provided further level analysis nodes up to the first logically centralized entity. Actions to be executed can be potentially decided and communicated at each level/layer.

All analysis nodes are capable to access directly or indirectly the at least one first logically centralized entity, particularly all analysis nodes have direct or indirect access to the storage of the at least one first logically centralized entity, where the assignments from traffic profiles to actions are stored.

Generally, the security system is configured to be iteratively extended with regard to the number of first level analysis nodes, the number of second level analysis and/or a number of layers of further analysis nodes. That means that within the tree structure in the direction of the root/the first logically centralized entity a third layer of third level analysis nodes, a fourth layer of fourth level analysis nodes and so forth can be introduced as needed.

At least one network edge node is configured to execute the at least one action for the data traffic, whereby the execution of the at least one action is generally triggered by the at least one first level analysis node. It is possible that the at least one network edge node operates simultaneously as data extracting point and as action executing instance. However, it is also possible that the data extracting point and the action executing instance are realised by separated nodes. The analysis nodes, i.e. the at least one first level analysis node and the at least one second level analysis node, are configured to allocate actions to any network edge node. In the case that any one of the network edge node is not capable to execute an action allocated to said network edge node, it can forward said action to a further network edge node located at the same communication path.

According to a further possible embodiment of the proposed system, the data network is a mobile network. In the case of a mobile network, the network edge node is typically a PGW (PDN (public data network) Gateway) which is a component of the evolved packet core (EPC). However, the network edge node can also be any other type of access or core network node, e.g. a mobile IP anchor, a PPP (point-to-point protocol) tunnel endpoint, an OLT (optical line termination) or a native switch or a router.

For placement of the analysis and learning process at the network edge two options exist:
- In the most simple setup, the at least one network edge node will log information about the data traffic, analyse the logged information, extract/generate traffic profiles therefrom and transmit the generated traffic profiles to the at least one first level analysis node which is hosted by a further network node independent of the at least one network edge node which generated the traffic profiles;
- In case that the at least one network edge node has sufficient processing capability, the at least one network edge node can host itself the analysis function of at least the at least one first level analysis node.

The traffic profiles allow to generate evaluable and reliable traffic profiles.

The analysis function of the at least one first level analysis node can also be placed at a peering point or any transition router inside the data network wherein the analysis function of the first level analysis node can be either hosted in an according network device, or in a separate platform. The separate platform can be realised, for example, on any common or specialised server platform such as, for example, a x86 server with an operating system and a network interface to at least one network edge node which collects traffic profile information of the data traffic.

At all links in the data network, the at least one network edge node and/or the at least one data extraction node can be introduced, either directly in a data path or connected to probes extracting the data traffic profile information directly from a wire or from mirroring ports of network data plane nodes. Within the scope of the present disclosure a probe is to be understood as an entity which has the only task to extract data traffic profile information of passing data traffic, identify any characteristics of the extracted data traffic profile information and forward respective traffic profiles to the respective higher level analysis nodes. In the simplest case, a probe is a reading device inserted in a glass fibre.

The at least one first level analysis node is directly connected to one or more network edge nodes and possibly also to one or more data extracting points. Generally the proposed security system comprises more than one data extracting point and more than one network edge node, and also more than one first level analysis node and also more than one second level analysis node. Thus, each first level analysis node is generally directly connected to one or more data extracting points, and to one or more network edge nodes. Each first level analysis node is configured to receive traffic profiles from the one or more data extracting point or from the one or more network edge node with which it is connected. Each first level analysis node is further configured to filter the received traffic profiles, to apply a first learning algorithm to the evaluable traffic profiles, to store the learned traffic profiles locally and to forward the learned traffic profiles to the next hierarchical level, namely to at least one second level analysis node. The first level analysis node forwards the learned traffic profiles only when a configurable confidence level with respect to the learned profiles is reached. At each first level analysis node when receiving traffic profiles from at least one network edge node, a learning algorithm is processing the traffic profiles, thus, extracting therefrom finally reliable traffic profiles which are called learned traffic profiles. However, the learning as such is highly dynamic and, thus, the learned traffic profiles can change over the time (of observing the data traffic). The only information the learning algorithm needs, consists of a number of traffic profiles from the data traffic in order to derive therefrom reliable and configurable traffic profiles. Only when a configurable confidence level is reached, the learned traffic profiles are forwarded to the next hierarchy level of analysis nodes, namely to at least one second level analysis node which is not directly connected to data plane nodes, particularly not to the at least one network edge node or to any data extracting point, but only to one or more first level analysis nodes and to further upstream processing path elements, i.e. to further first level analysis nodes as the system as a whole can be recursively implemented and operating. That means that the actions to be executed can be propagated within one layer of the tree structure and from higher level analysis nodes to lower level analysis nodes within the tree structure.

According to a further embodiment of the proposed security system, the system comprises a very flat hierarchy structure, meaning that all functions, including the analysis functions of the analysis section of the security system, are combined/aggregated within one layer of nodes. That means that each node of said layer is configured to realise all data extracting and analysis functions. The nodes within said layer update each other.

The proposed security system further comprises at least one first logically centralized entity which is connected to at least one second level analysis node or to at least one higher level analysis node in the case that the analysis section, i. e. the analysis hierarchy has more than two layers. The at least one first logically centralized entity is always connected to at least one upmost level analysis node. The at least one first logically centralized entity can potentially be physically centralized and is configured to store rules which assign certain traffic profiles to respective actions, respectively. That means, that the at least one first logically and potentially physically centralized entity stores rules associated with certain events/traffic profiles. Further, the at least one first logically centralized entity is configured to distribute, whenever the at least one second level analysis node receives one of the certain traffic profiles from the at least one first level analysis node with a preconfigured frequency, respective rules to the at least one second level analysis node which forwards the respective rules to the at least one first level analysis node for triggering execution of at least one action assigned to the received one of the certain traffic profiles.

According to a further embodiment of the proposed system, the security system further comprises a second logically and potentially physically centralized entity which is configured to store potential metadata provided by at least one customer and data delivered by any operator. Those metadata can be used to decide if the respective action assigned to the received one of the certain traffic profiles shall be applied or not. Therefore, the at least one second logically centralized entity is connected to the at least one first logically centralized entity in order to include those data when deciding about the execution of the at least one action. The at least one second logically centralized entity is also accessible via the at least one first logically centralized entity for all analysis nodes which are also capable to make any decision about the execution of an action in reaction to the occurrence of a traffic profile within the observed data traffic.

The proposed system further comprises according to a further embodiment at least one publishing portal which is connected to the at least one first logically centralized entity and configured to publish the at least one action which has been filtered and forwarded by the at least one first logically centralized entity. The publishing portal is accessible by at least one customer. A customer can be anyone, but is expected to be primarily a device manufacturer of a device which is operating in the network, an owner of such a device or an operator of the data network.

According to a further embodiment of the security system the at least one first level analysis node and/or the at least one second level analysis node are/is placed at a peering point inside the data network, a transitional router inside the data network or at the network edge, particularly at the at least one network edge node which simultaneously acts a data extracting point.

According to another embodiment of the security system, the at least one network edge node and/or the at least one data extraction node are/is placed at any link inside the data network, either directly in a data path or connected to a probe, extracting the data traffic profile information directly from a wire or from at least one mirroring port of data plane nodes of the data network. A commercially available probe itself could also operate as a data extraction node as it is generally an optical splitter inserted in a glass fibre and copying all signals to a second data connection. The probe itself is passive and, thus, traffic profiles are generated on a network edge node reachable via the second data connection.

According to a further embodiment of the security system, the at least one second level analysis node is further configured to check received profiles from the at least one first level analysis node for cross-first level analysis node relevance and to forward the respective profiles to respective relevant first level analysis nodes and to the first logically centralized entity. As already mentioned above, the security system generally comprises a plurality of data extracting points and network edge nodes, a plurality of first level analysis nodes and a plurality of second level analysis nodes. The security system can be an iterative system, i.e. it operates iteratively and the learned traffic profiles are permanently reused as input for the learning algorithm applied by any of the plurality of first level analysis nodes and the rules stored in the at least one first logically centralized entity are iteratively determined/updated. The security system can also be iteratively increased, i.e. the number of data extracting points, particularly the number of network edge nodes operating i.e. as data extracting points, the number of first level analysis nodes and the number of second level analysis nodes can be recursively increased.

According to another embodiment of the security system, the at least one first centralized entity is further configured to store results of the at least one action and to distribute those results along with the at least one action to at least one further second level analysis node which is configured to further distribute said results and the at least one action to at least one further first level analysis node which is associated with the at least one further second level analysis node so that the at least one action can be triggered by a first level analysis node other than the one reporting the respective traffic profile initially. The execution of the at least one action is performed by any network edge node which is connected to said other first level analysis node.

Generally, the traffic profile information, i.e. the traffic profiles, from the data traffic within the data network is provided as information tuples to the at least one first level analysis node, wherein the tuples comprise items in terms of protocol header information and/or data which is addressable in metadata. Generally, the information tuples are checked at the at least one first level analysis node for matching rules, particularly based on metadata, wherein the rules are retrievable from the first logically centralized entity.

The present invention also refers to a method for securing a data network and terminal devices coupled to the data network, wherein the network comprises a network topology of a plurality of network data plane nodes which are interconnected wirelessly or wired. The proposed method comprises at least the following steps:
- extracting/generating, at at least one data extracting point, particularly at at least one network edge node, traffic profile information, i.e. traffic profiles from data traffic within the data network;
- filtering, at at least one first level analysis node, which is connected to the at least one data extracting point, particularly to the at least one network edge node, the traffic profile information from the data traffic;
- applying a learning algorithm to the traffic profile information, i.e. to the traffic profiles;
- deriving from the filtered traffic profiles at least one reliable traffic profile;
- forwarding, the at least one reliable traffic profile to at least one second level analysis node;
- checking the at least one reliable traffic profile for matching rules which are stored and retrievable from a first logically centralized entity;
- selecting at least one action which is associated with the matching rules;
- forwarding the at least one action to the at least one first level analysis node
- forwarding the at least one action from the at least one first level analysis node to the at least one network edge node for execution; and
- executing, triggered by the at least one first level analysis node, the at least one selected action on the at least one network edge node.

According to a possible embodiment of the proposed method, the steps of filtering the traffic profile information and deriving from the filtered traffic profile information at least one reliable traffic profile comprise executing the learning algorithm which is based on classifying the traffic profiles from the data traffic in different classes, particularly into either legitimate traffic or suspicious traffic. When executing the learning algorithm the steps of filtering the traffic profiles and deriving from the filtered traffic profiles a reliable traffic profile, are performed several times and recursively in order to finally derive from the traffic profiles recurring, and thus, configurable traffic profiles which can be clearly classified and assigned to respective rules and, thus, linked with respective actions which have to be executed when such a profile will be detected in the future.

According to a further embodiment of the proposed method the executed at least one action and results associated with the at least one action are forwarded by the at least one second level analysis node to the first logically centralized entity for storage and to at least one other than the one of the at least one first level analysis node which has reported about the traffic profile, for triggering local execution.

According to a further embodiment of the proposed method, the at least one second level analysis node stops the execution of the at least one selected action at least at some specific of the at least one first level analysis node, e.g. in the case that this action is not useful for this specific first level analysis node, particularly in view of respective evaluated metadata.

According to a further embodiment of the proposed method, the first logically centralized entity forwards the executed at least one action and results associated with the at least one action to at least one other than the one of the at least one second level analysis node reporting to execute the at least one action and the results associated therewith, for potential forwarding to further first level analysis nodes associated with at least one other second level analysis node.

Performing the method steps of the proposed method inside the hierarchy levels of the proposed security system can be organized as follows:
- The first level analysis nodes evaluate traffic flows based on available data, particularly on the traffic profile information, i.e. traffic profiles which the first level analysis nodes have received from one or more data extracting points, particularly from one or more network edge nodes. Each first level analysis node applies a learning algorithm to the traffic profile information/traffic profiles which have been received from one or more network edge nodes. Each first level analysis node summarizes learnings about the evaluated traffic profiles into reliable traffic profiles which are sent to one or more second level analysis nodes.
- Each second level analysis node processes the received traffic profiles, checks the profiles for cross-first level analysis node relevance, i.e. the respective second level analysis node checks whether a received traffic profile has become manifest in several first level analysis nodes, and forwards those traffic profiles to those other relevant first level analysis nodes which are in his area of responsibility as well as to the first logically centralized entity.
- Each first level analysis node executes rules and triggers actions which are associated with those rules and which are relevant for a detected traffic profile. The execution of those rules together with the execution of the associated actions is based, due to the learning process about the traffic profiles on pre-configured triggers. The first level analysis node is configured to stop execution of an action at any network edge node in its area of responsibility, i.e. with which it is connected, i.e. in any of its subbranches. Each first level analysis node further forwards a list of taken actions to the second level analysis node in whose area of responsibility the first level analysis node lies.
- The second level analysis nodes forward taken actions to further relevant first level analysis nodes for triggering local execution and to the first centralized entity. The relevant first level analysis nodes are those nodes which are in the area of responsibility of the respective second level analysis nodes and which are other than the first level analysis node which has reported about the detected traffic profile. The second level analysis nodes are also configured to stop via respective first level analysis nodes execution at any network edge node Thus, the second level analysis nodes represent a next level control hierarchy above the first level analysis nodes.

The first logically centralized entity forwards the list of taken actions from the second level analysis node to other relevant second level analysis nodes for triggering local execution and potential forwarding to relevant first level analysis nodes which are in the respective areas of responsibility of the further second level analysis nodes. Probably, if such a service is foreseen and after optionally applying according filters, the list of actions is also forwarded to a publishing portal. Thus, the first logically centralized entity represents the top level control hierarchy above the second level analysis nodes. This allows the first logically centralized entity or the second level analysis nodes to have actions executed on any network edge node connected to a first level analysis node other than the one originally reporting the detected traffic profile, i.e. in case of blocking incoming traffic at a peering point, and not at a downstream edge, particularly not at a network edge node extracting the traffic profile information from the data traffic.

The number of hierarchy levels can be recursively increased and does not have to be of the same depth along all paths. The functionality is independent from the number of hierarchy layers and the functionality of the second level analysis node or the first logically centralized entity can be configured.

Optional metadata which are to be considered when executing respective actions or when applying respective rules are distributed by the second logically centralized entity to the first logically centralized entity and subsequently forwarded to all the relevant second level analysis nodes and from there to all relevant first level analysis nodes.

According to one possible embodiment of the proposed security system the first level analysis nodes are positioned at the network edge, particularly at respective network edge nodes in case the respective network edge nodes have a required processing capability, respectively. Basis for processing at the network edge are traffic profiles in terms of traffic profile information tuples describing the traffic. The first layer analysis nodes have the task to check those tuples for matching rules, e.g. based on the metadata which has been retrieved from the first logically centralized entity, or for violating learned traffic profiles. Those information tuples can include anything which is available in terms of header information of the respective data packets constituting the data traffic. In case of IP data packets, i.e. IP datagrams, the information tuples can include e.g.
- source address
- destination address
- used protocol
- fragmentation bit
- DSCP bits
- transportation protocol
- application protocol

Further, metadata can be analysed as provided by the data plane producing the data traffic or based on the traffic running through the analysing node, i.e. the first level analysing node itself.

Although the capabilities and, thus, the usefulness of the present invention is increasing with the amount and scope of available data, it does not depend on the amount or scope of data provided.

In the case of unencrypted data traffic, a significant amount of additional information can be retrieved from analysis of the payload of each data packet itself. This requires that the payload runs through the respective first level analysis node itself, i. e. that a network edge node or a data extraction node is a part of the respective first level analysis node, or that the payload is copied to that first level analysis node. The analysis performed by the first level analysis node is independent from the way the data traffic is routed through the respective first level analysis node. Thus, delivery of data traffic to the first level analysis node can be done in various ways. It is possible that the respective first level analysis node is included as next hop in the routing table of up- and downstream nodes. The respective first level analysis node is implemented at an selected device which is integrated via a static route on a downstream-node of the traffic path. Further it is possible that the traffic is sniffed from probes directly from a wire. Further it is possible that the traffic is copied inside another network element using port mirroring and transferred to the respective first level analysis node. The information which can be retrieved from payload includes, but is not limited to:
- all protocol header related information
- all data which can be addressed in metadata.

Additional source of information is the communication behaviour, e.g. a frequency of exchange might provide hints for differentiation between human and machine based traffic sources.

When applying the learning algorithm to the traffic profile information, i.e. to the traffic profiles from data traffic, the learning is based on classifying the type of data traffic into different classes. It is to be differentiated between legitimate payload and suspicious data traffic. Suspicious traffic profiles include, but are not limited to:
- address and/or port scanning
- address spoofing
- unsolicited control protocol messages, e.g. routing information
- repeated access attempts
- devices reappearing in another network due to physical relocation
- devices reappearing in another network due to change in access technology
- devices sending instead of receiving or vice versa, e.g. participating in (D)DoS attacks,
- devices sending or receiving in unusual patterns, e.g. doing upgrades too frequently or from a wrong repository,
- device up- or downloading more data than can actually be stored on it (using metadata).

The rules assign certain traffic profiles to suitable actions, i.e. defence mechanisms can be pre-configured for certain traffic profiles. Once one of that certain traffic profiles is detected with accordingly pre-configured frequency the assigned action can be selected automatically by applying the respective rules. In order to prevent unsolicited blocking of rightful traffic, an option which does not completely block access should be included in the list of actions, e.g. the option that the provided bandwidth is throttled so that a violation of an allowed limit is effectively not possible.

The list of necessary actions which can be assigned to certain traffic profiles includes, but is not limited to:
- blocking traffic completely either based on source or destination or both
- exponentially growing time delay, e.g. for logins, ssh connection attempts or other repeated actions
- scale down of bandwidth
- alerting subscribed owners if metadata is available
- blackholing potential attack sources on the network edge, which does, however, not prevent traffic between the identified endpoints and other endpoints.

Scaling, i.e. a potential extension of the system regarding capability (performance), network coverage, number of controlled nodes/interfaces, etc. is covered by the hierarchical architecture of the proposed security system which can be recursively increased. In case more data plane bandwidth or paths have to be covered, the number of first level analysis nodes can be increased. In case a bottleneck appears on the layer of the second level analysis nodes, the number of the second level analysis nodes can be increased and/or the first level analysis nodes can be reassigned to respective further second level analysis nodes.

In case the capacity of the first logically centralized entity and/or the second logically centralized entity have/has to be extended, the underlying data storage can be extended. In case the publishing entity's, i.e. the publishing portal's capacity has to be extended, load balancing or other means of clustering as commonly applied to web services can be used.

Typically, the second level analysis nodes will cover a set of first level analysis nodes as defined by the structure of the underlying data network. However, the second level analysis nodes can also be assigned based on other considerations, such as e.g. using a set of first level analysis nodes for data traffic from a certain roaming partner or for devices of a certain tenant. It is aspired to keep distribution of control information, profiles, rules and actions, to the smallest number of first level analysis nodes and second level analysis nodes possible.

At least one second level analysis node should be used for each autonomous system (AS) the organization is running.

The NEN can be implemented on any router or server which is located on a data path within the data network. That means that the NEN can be implemented as an additional function of an already existing physical device inside a respective data path. Alternatively, the NEN can be implemented on a separate server platform which is additionally inserted in a data path of the data network. Standardized network elements which could be used are, for example, PPP, GTP, mobile IP termination, native router, native switches, peering points.

Probes can be everywhere where data connections are. Mirroring ports are also possible.

The analysis nodes can be implemented on a server platform which is connected to the data network, particularly to the NENs and potentially existing data extracting nodes. Such server platform can be physically separated from the data network or it can be an integrative part of the data network.

In case the filtering of the traffic information is applied to a central network node, the first level analysis nodes are assigned on a per port basis, e.g. mirroring or probing traffic per port, in order to cope with the amount of data traffic.

The nodes of the security system, namely the first level analysis nodes, the second level analysis nodes, the first logically centralized entity as well as any additional layer nodes are defined by configuring lists of up- and downstream entities. Functionality of first level analysis nodes, the publishing portal and the second originally centralized entity are distinct. Second level analysis nodes and the first logically centralized entity are defined by according configuration. A configuration includes primary and secondary paths which can be used in case of loss or overload. A definition of overload can be done in various ways, e.g. update of configuration files can be used to perform topology changes or seamless upgrades (adding updated nodes and subsequent destruction of virtual instances running outdated releases).

All functionality can be implemented natively on server hardware, on containers, e.g. docker or LXC (Linux Container), or on virtual machines, e.g. kvm based. Advantage of virtual machines and container based deployment is an easier handling of the respective instances.

In case that first level analysis node instances are not part of the data plane, that means the plane where the data packets are originally running, they receive traffic profile information tuples, i.e. traffic profiles, from data plane nodes, e.g. from the network edge nodes or from probes which are located separately from the network.

In case of specific network topologies or low performance requirements, the architecture of the proposed security system can be deployed in a collapsed way. That means, the first level analysis node, first and second logically centralized entities are hosted on one hardware instance. In this case, the second level analysis node can be skipped due to functional equivalence of the second level analysis node and first logically centralized entity. The publishing portal and the second logically centralized entity can be potentially hosted on the same hardware or be removed from the overall architecture.

Advanced services are based on metadata which is provided by a third party. This can be, for example, the device manufacturer, the device user, a device owner, a customer, an organization or any other kind of partner who has access to a data network and the right of distribution of relevant metadata. The metadata is stored in the second logically centralized entity and used for analysis in first level analysis nodes, second level analysis nodes and the first logically centralized entity.

The metadata can be matched against all processed types of data, but will be most useful in relation to payload analysis. Distribution from the first logically centralized entity to second level analysis nodes and first level analysis nodes is done by applicability, as derived from forwarded traffic profiles, so only nodes which are able to make use of it, do receive it. The lowest hierarchy level will not make use of information that is intended to check if a specific tenant is under attack as this cannot be decided on basis of traffic on a single node, and accordingly not receive customer device manufacturer related information used to identify the device. That means that some attacks can only be recognized at specific hierarchy levels. In the case that all devices of one customer which are distributed over the entire network are under attack, such an attack cannot be recognized at one single access node of the network, but only via an overview of the entire network, i.e. from a higher analysis level which allows such an overview of the entire network.

The delivery of metadata may be done with or without a contractual relationship in place. The technical implementation can be done based on simple file transfer, online interface to databases or any other suited means.

The metadata store as part of the first logically centralized entity might include, amongst other, the following data:
- customer ID data
- usernames and passwords (in case readable from the data plane)
- used algorithms (to differentiate e.g. SHA (Secure Hash Algorithm) from MD5 (Message-Digest Algorithm 5))
- device type (description mapped to serial number or serial number format)
- device description, complementary to device type
- radio interface details of the device
- MAC addresses or other means of hardware identification
- MSISDN, IMSI or other means of SIM or soft-SIM identification
- device communication partners, e.g. IP addresses, domain names, geographical locations
- protocols used for communicating with device
- geographical deployment area
- expected packet length
- encryption related information, such as used protocols and cyphers, versions of them etc.
- expected packet size or size distribution
- expected datagram payload
- expected higher layer protocol details, e.g. services listening on non-standard ports
- expected datagram payload format, e.g. text or binary data
- size of device firmware
- size of device data storage capacity
- meaning of device serial numbers or other means of identification
- geographical delivery and/or deployment/usage area of devices.

In addition metadata can refer to all protocol header information elements of a data packet.

Metadata can be used to white- and/or blacklist devices based on the contract applicable to the device. An owner of a respective device can decide in the respective contract to which extent his device should be protected, e.g. there is no protection and the owner is only informed about a detected potential attack to his device, the data traffic to his device is blocked or the provided bandwidth for this device is reduced. The desired protection which has been chosen by the respective owner is specified in the respective contract and then provided accordingly as a service to the respective owner. In case the contract owner does not wish to use the provided service, the device is flagged accordingly in the metadata and profiles will not be evaluated.

Based on device metadata retrieved from the customer, additional services can be implemented, this includes but is not limited to:
- theft prevention if devices appear outside its assigned geographical location
- alerts if devices lose power measured by radio reception level.

The use case yields the advantage of inherently requiring to be placed in the operator data network and preferably at the network edge. Further, it does not depend on non-encrypted traffic. As it can whitelist and/or blacklist devices it does not require complex legal agreements between operator and device owner or manufacturer.

Other use cases might be:
- reading the traffic itself in case of network optimization (inherent encryption problems)
- solve the issue of conflicting controllers (as in video optimization, which creates a clash between MPEG-DASH controller on end device inside the network; encryption problem not withstanding)
- it does not rely on an arms race with the device owner as e.g. optimization of radio network behaviour where device manufacturers such as Apple or Google have much more and better data.

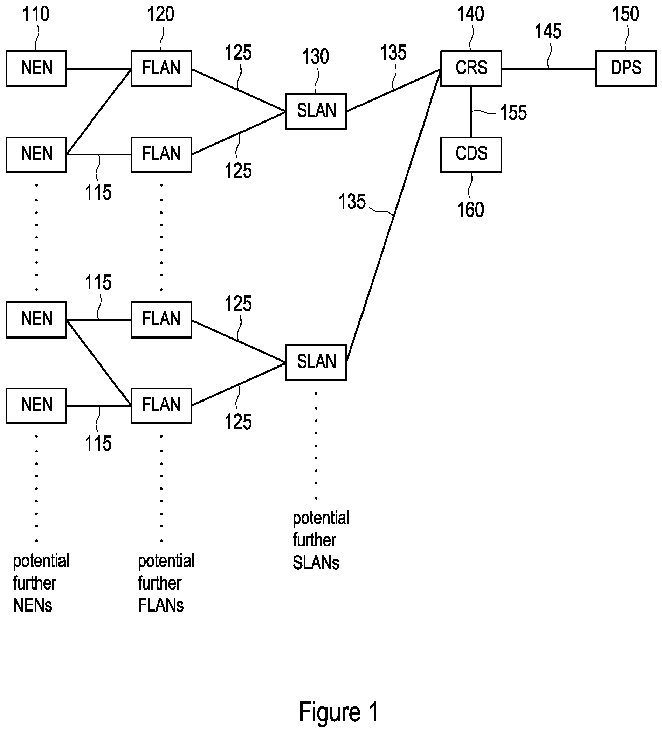

Further embodiments of the present invention are described herein by way of example in conjunction with the following figure, wherein
- Figure 1: shows a schematic architecture illustrating an embodiment of the proposed security system.

While one embodiment of the invention is described in conjunction with the figure, it should be apparent that various modifications, alterations and adaptations to this embodiment may occur to a person skilled in the art with the attainment of some or all of the advantages of the present invention. It is therefore intended to cover all such modifications, alterations and adaptations without departing from the scope of the present invention as defined by the appended claims.

Figure 1 shows a possible hierarchical architecture of an embodiment of the proposed security system. The security system is built up hierarchically in four layers. The lowermost layer comprises a plurality of network edge nodes (NEN) 110 which are realized in mobile networks typically as PGWs. However, such a network edge node can also be any other type of access or core network node, e.g. a mobile IP anchor, a PPP tunnel endpoint, an OLT or a native switch or router. The security system further comprises an analysis part which is subdivided into at least two layers, in the example shown here into a first layer of analysis nodes (FLAN) 120 and a second layer of analysis nodes (SLAN) 130. The first level analysis nodes 120 are directly connected to one or more network edge nodes 110 via respective links 115. The second level analysis nodes 130 are not directly connected to network edge nodes 110 but only via the first level analysis nodes 120. The second level analysis nodes 130 are connected via respective links 125 to one or more first level analysis nodes 120. The assignment of first level analysis nodes 120 to network edge nodes 110 and the assignment of second level analysis nodes 130 to first level analysis nodes 120, respectively, can be configured according to pre-given specifications and/or requirements. Thus, it is possible that the respective assignments are based on the geographic localization of the respective instances realizing functionalities of the respective nodes. In a further layer above the second layer there is the first logically and potentially physically centralized entity (CRS) 140 which is connected to one or more second level analysis nodes 130 via respective links 135. The first logically and potentially physically centralized entity 140 is further connected to a publishing portal (DPS) 150 via link 145 and to a second locally and potentially physically centralized entity (CDS) 160 via link 155.

The first level analysis nodes 120 have the task to evaluate traffic flows which have been reported to them via respective network edge nodes 110. The evaluation of the first level analysis nodes 120 can be based on different factors, e.g. on available metadata which are stored by and retrievable from the first logically and potentially physically centralized entity 140. The evaluation of the traffic flows is performed by applying a respective learning algorithm to the traffic data in order to derive from the traffic flows finally reliable traffic profiles which can be detected recurrently. Those learned profiles as results of the appliance of the learning algorithm to the traffic flows are finally sent to a second level analysis node 130 which is associated with the respective first level analysis node 120 which has evaluated the traffic flow via a respective link 125. The second level analysis node 130 processes the received traffic profiles, checks those received traffic profiles for a potential relevance for other first level analysis nodes 120 which are different from the first level analysis node 120 which has reported about the traffic profile. In case that the second level analysis node 130 identifies a profile that manifests across several first level analysis nodes 120, i.e. a profile that is derived from traffic profile information on several first level analysis nodes 120, such profile is forwarded to the other relevant first level analysis nodes 120 which are located in its area of responsibility, i.e. in its subbranches, as well as to the first logically centralized entity 140.

In the case that the first level analysis node 120 derives from the traffic flows which have been detected by the network edge node 110 an already learned traffic profile, rules which are stored in the first logically centralized entity 140 and which assign certain traffic profiles to specific actions are provided to allow the respective first level analysis node 120 to apply those rules relevant for the detected traffic profile based on pre-configured triggers. The respective actions assigned to those rules are finally executed by at least one network edge node 110 which is connected to the respective first level analysis node 120. Afterwards, the first analysis level node 120 forwards a list of taken actions to the respective second level analysis node 130. The respective second level analysis node 130 forwards those taken actions to other relevant first level analysis nodes 120 for triggering execution of those actions on network edge nodes 110 connected to those other relevant first level analysis nodes 120 and to the first logically centralized entity 140. Further, the second level analysis node 130 is also configured to stop execution of those actions at any given first level analysis node 120, thus, the second level analysis nodes 130 represents a higher level control hierarchy above the first level analysis nodes 120.

The first logically centralized entity 140 forwards the received list of taken actions to potential other relevant second level analysis nodes 130 and potential forwarding to further relevant first level analysis nodes 120. Further, the first logically and potentially physically centralized entity 140 can also send the list of taken actions to the publishing portal 150. Thus, the first logically centralized entity 140 represents the top level hierarchy above the second level analysis nodes 130. This allows the first logically centralized entity 140 to have actions executed on at least one network edge node connected to a first level analysis node 120 other than the one originally reporting the detected traffic profile. Thus, it is possible that an incoming traffic is blocked at a peering point (i.e. at a passage to a further network, e.g. in the backbone), and not at a downstream edge of the network as the first logically centralized entity 140 has a broader overview over the entire data network as any of the first layer analysis nodes 120.

The number of hierarchy levels can be recursively increased and does not have to be of the same depth along all paths. The functionality is independent from the number of hierarchy layers/levels and the functionality of the second level analysis nodes 130 or the first logically centralized entity 140 can be configured. Optional metadata will be distributed by the second logically and centralized entity 160 to the first logically centralized entity 140 and subsequently forwarded by the first logically centralized entity 140 to all relevant second level analysis nodes 130 and from there to the first level analysis nodes 120.

## Claims

1. A security system for a data network and for terminal devices coupled to the data network, the network comprising a network topology of a plurality of network nodes which are interconnected with each other, the security system being built-up hierarchically and implemented in the data network and comprising at least:
- at least one network edge node (110) of the data network which is configured to extract data traffic profile information of passing data traffic within the data network, directly from a wire or from mirroring ports of network data plane nodes, to identify any characteristics of the extracted data traffic profile information, to generate traffic profiles from data traffic within the data network and to forward the generated traffic profiles to at least one first level analysis node (120) wherein the traffic profiles being provided as information tuples wherein the information tuples comprise items in terms of protocol header information and/or data which is addressable in metadata;
- the at least one first level analysis node (120) being connected to the at least one network edge node (110) and configured to receive the traffic profiles of the data traffic, to apply a learning algorithm to the traffic profiles, to store the learned traffic profiles locally and to forward at least some of the learned profiles which have become firmly established, to at least one second level analysis node (130),
- the at least one second level analysis node (130) being connected to the at least one first level analysis node (120) and to at least one first logically centralized entity (140) and configured to receive the learned profiles from the at least one first level analysis node (120);
- the at least one first logically centralized entity (140) which is configured to store rules which assign certain traffic profiles to respective actions, respectively, and to distribute, when the at least one second level analysis node (130) receives one of the certain traffic profiles from the at least one first level analysis node, the respective rules to the at least one second level analysis node (130) which is configured to forward the respective rules to the at least one first level analysis node (120) for triggering execution of at least one action assigned to the received one of the certain traffic profiles.

2. The system according to claim 1, wherein the at least one second level analysis node (130) is further configured to generate aggregated traffic profiles on the basis of the received learned profiles.

3. The system according to claim 1 or 2, wherein the data network is a mobile network.

4. The system according to claim 3, wherein the at least one network edge node is a data plane node of the group of nodes comprising a PGW, a mobile IP anchor node, a PPP tunnel endpoint, a GTP tunnel endpoint.

5. The system according to claim 1 to 4, wherein the data network further comprises at least one second logically centralized entity (160) which is connected to the at least one first logically centralized entity (140) and configured to store metadata provided by a third party, particularly by a customer or by an operator of the data network, the metadata being considered when applying the respective rules.

6. The system according to any one of the preceding claims which further comprises at least one publishing portal (150) which is connected to the at least one first logically centralized entity (140) and configured to publish the at least one action which has been filtered and forwarded by the at least one first logically centralized entity (140).

7. The system according to any one of the preceding claims wherein the at least one network edge node (110); the at least one first level analysis node (120) and/or the at least one second level analysis node (130) are/is placed at a peering point inside the data network, a transition router inside the data network or at any link inside the data network, either directly in a data path or connected to a probe which extracts traffic profile information directly from a wire or from at least one mirroring port of data plane nodes of the data network.

8. The system according to any one of the preceding claims wherein the system is configured to be iteratively extended with regard to the number of first level analysis nodes (120), the number of second level analysis nodes (130) and/or a number of layers of further analysis nodes.

9. The system according to any one of the preceding claims wherein the at least one second level analysis node (130) is further configured to check the received profiles for cross-first level analysis node relevance and to forward the respective profiles to the respective relevant first level analysis nodes of the at least one first level analysis node (120) and to the first logically centralized entity (140).

10. The system according to any one of the preceding claims wherein the at least one first centralized entity (140) is further configured to store results of the at least one action and to distribute said results and the at least one action to at least one further of the at least one second level analysis node (130) which is configured to further distribute said results and the at least one action to at least one further of the at least one first level analysis node (120) which is associated with the at least one further second level analysis node so that the at least one action can be triggered for execution by a first level analysis node other than the one of the at least one first level analysis node (120) reporting the traffic profile.

11. The system according to any one of the preceding claims wherein the traffic profiles from data traffic within the data network are provided as information tuples, wherein the tuples comprises items in terms of protocol header information and/or data which is addressable in metadata, and are checked at the at least one first level analysis node (120) for matching rules, particularly based on metadata.

12. A method for securing a data network and terminal devices coupled to the data network, the network comprising a network topology of a plurality of network nodes which are interconnected with each other, the method comprising at least the following steps:
- extracting, at at least one network edge node, traffic profiles of passing data traffic within the data network, directly from a wire or from mirroring ports of network data plane nodes, identifying any characteristics of the extracted data traffic profile information and forwarding respective traffic profiles from the data traffic within the data network to at least one first level analysis node wherein the traffic profiles being provided as information tuples wherein the information tuples comprise items in terms of protocol header information and/or data which is addressable in metadata;
- receiving, at the at least one first level analysis node, the traffic profiles of the data traffic, applying a learning algorithm to the traffic profiles, deriving from the traffic profiles at least one learned traffic profile, storing the at least one learned traffic profile locally and forwarding at least some of the at least one learned traffic profile to at least one second level analysis node;
- **checking at the at least one first level analysis node the at least one learned traffic profile for matching rules** which are stored and retrievable from a first logically centralized entity, wherein the rules assign certain traffic profiles tc respective actions, respectively;
- distributing, by the first logically centralized entity, when the at least one second level analysis node receives one of the certain traffic profiles from the at least one first level analysis node, the respective rules to the at least one second level analysis node which forwards the respective rules to the at least one first level analysis node for triggering execution of at least one action assigned to the received one of the certain traffic profiles;
- executing, triggered by the at least one first level analysis node, the at least one selected action.

13. The method according to claim 12 wherein applying the learning algorithm is based on classifying the traffic profiles from the data traffic into different classes, particularly into either legitimate traffic or suspicious traffic.

14. The method according to claim 12 or 13 wherein the executed at least one action and results associated with the at least one action are forwarded by the at least one second level analysis node to the first logically centralized entity for storage and to at least one other than the one of the at least one first level analysis node reporting the traffic profile, for triggering local execution.

15. The method according to claim 12, 13 or 14, wherein the at least one second level analysis node stops the execution of the at least one selected action at least at some of the at least one network edge node.

16. The method according to any one of claims 12 to 15, wherein the first logically centralized entity forwards the executed at least one action and results associated with the at least one action to at least one other than the one of the at least one second level analysis node reporting the executed at least one action and the results associated therewith, for potential forwarding to further first level analysis nodes associated with the at least one other second level analysis node.

## Patentansprüche

1. Sicherheitssystem für ein Datennetzwerk und für an das Datennetzwerk gekoppelte Endgerätevorrichtungen, wobei das Netzwerk eine Netzwerktopologie aus einer Mehrzahl von Netzwerkknoten umfasst, die miteinander verbunden sind, wobei das Sicherheitssystem hierarchisch aufgebaut und im Datennetzwerk implementiert ist und mindestens das Folgende umfasst:
- mindestens einen Netzwerkrandknoten (110) des Datennetzwerks, der dazu konfiguriert ist, Datenverkehrsprofilinformationen des passierenden Datenverkehrs innerhalb des Datennetzwerks direkt aus einer Leitung oder aus Spiegelungsports von Netzwerkdatenebenenknoten zu extrahieren, jegliche Merkmale der extrahierten Datenverkehrsprofilinformationen zu identifizieren, Verkehrsprofile aus dem Datenverkehr innerhalb des Datennetzwerks zu erzeugen, und die erzeugten Verkehrsprofile an mindestens einen Analyseknoten der ersten Ebene (120) weiterzuleiten, wobei die Verkehrsprofile als Informationstupel bereitgestellt werden, wobei die Informationstupel Elemente in Form von Protokollkopfinformationen und/oder Daten umfassen, die in Metadaten adressierbar sind;
- den mindestens einen Analyseknoten der ersten Ebene (120), der mit dem mindestens einen Netzwerkrandknoten (110) verbunden und dazu konfiguriert ist, die Verkehrsprofile des Datenverkehrs zu empfangen, einen Lernalgorithmus auf die Verkehrsprofile anzuwenden, die gelernten Verkehrsprofile lokal zu speichern und mindestens einige der gelernten Profile, die sich fest etabliert haben, an mindestens einen Analyseknoten der zweiten Ebene (130) weiterzuleiten,
- den mindestens einen Analyseknoten der zweiten Ebene (130), der mit dem mindestens einen Analyseknoten der ersten Ebene (120) und mit mindestens einer ersten logisch zentralisierten Einheit (140) verbunden und dazu konfiguriert ist, die gelernten Profile von dem mindestens einen Analyseknoten der ersten Ebene (120) zu empfangen;
- die mindestens eine erste logisch zentralisierte Einheit (140), die dazu konfiguriert ist, Regeln zu speichern, die bestimmte Verkehrsprofile jeweiligen Aktionen zuweisen, und, wenn der mindestens eine Analyseknoten der zweiten Ebene (130) eines der bestimmten Verkehrsprofile von dem mindestens einen Analyseknoten der ersten Ebene empfängt, die jeweiligen Regeln an den mindestens einen Analyseknoten der zweiten Ebene (130) zu verteilen, der dazu konfiguriert ist, die jeweiligen Regeln an den mindestens einen Analyseknoten der ersten Ebene (120) weiterzuleiten, um die Ausführung mindestens einer Aktion auszulösen, die dem empfangenen der bestimmten Verkehrsprofile zugewiesen ist.

2. System nach Anspruch 1, wobei der mindestens eine Analyseknoten der zweiten Ebene (130) ferner dazu konfiguriert ist, aggregierte Verkehrsprofile auf der Grundlage der empfangenen gelernten Profile zu erzeugen.

3. System nach Anspruch 1 oder 2, wobei das Datennetzwerk ein Mobilfunknetzwerk ist.

4. System nach Anspruch 3, wobei der mindestens eine Netzwerkrandknoten ein Datenebenenknoten der Knotengruppe ist, die einen PGW, einen mobilen IP-Ankerknoten, einen PPP-Tunnelendpunkt, einen GTP-Tunnelendpunkt umfasst.

5. System nach den Ansprüchen 1 bis 4, wobei das Datennetzwerk ferner mindestens eine zweite logisch zentralisierte Einheit (160) umfasst, die mit der mindestens einen ersten logisch zentralisierten Einheit (140) verbunden und dazu konfiguriert ist, Metadaten zu speichern, die von einer dritten Partei, insbesondere von einem Kunden oder von einem Betreiber des Datennetzwerks, bereitgestellt werden, wobei die Metadaten bei der Anwendung der jeweiligen Regeln berücksichtigt werden.

6. System nach einem der vorangegangenen Ansprüche, das ferner mindestens ein Veröffentlichungsportal (150) umfasst, das mit der mindestens einen ersten logisch zentralisierten Einheit (140) verbunden und dazu konfiguriert ist, die mindestens eine Aktion zu veröffentlichen, die von der mindestens einen ersten logisch zentralisierten Einheit (140) gefiltert und weitergeleitet wurde.

7. System nach einem der vorangegangenen Ansprüche, wobei der mindestens eine Netzwerkrandknoten (110), der mindestens eine Analyseknoten der ersten Ebene (120) und/oder der mindestens eine Analyseknoten der zweiten Ebene (130) an einem Peering-Punkt innerhalb des Datennetzwerks, einem Übergangsrouter innerhalb des Datennetzwerks oder an einer beliebigen Verbindung innerhalb des Datennetzwerks angeordnet ist/sind, entweder direkt in einem Datenpfad oder verbunden mit einer Sonde, die Verkehrsprofilinformationen direkt aus einer Leitung oder aus mindestens einem Spiegelungsport von Datenebenenknoten des Datennetzwerks extrahiert.

8. System nach einem der vorangegangenen Ansprüche, wobei das System dazu konfiguriert ist, hinsichtlich der Anzahl von Analyseknoten der ersten Ebene (120), der Anzahl von Analyseknoten der zweiten Ebene (130) und/oder einer Anzahl von Schichten weiterer Analyseknoten iterativ erweitert zu werden.

9. System nach einem der vorangegangenen Ansprüche, wobei der mindestens eine Analyseknoten der zweiten Ebene (130) ferner dazu konfiguriert ist, die empfangenen Profile auf Relevanz bezüglich Analyseknoten der ersten Ebene zu prüfen und die jeweiligen Profile an die jeweiligen relevanten Analyseknoten der ersten Ebene des mindestens einen Analyseknotens der ersten Ebene (120) und an die erste logisch zentralisierte Einheit (140) weiterzuleiten.

10. System nach einem der vorangegangenen Ansprüche, wobei die mindestens eine erste zentralisierte Einheit (140) ferner dazu konfiguriert ist, Ergebnisse der mindestens einen Aktion zu speichern und die Ergebnisse und die mindestens eine Aktion an mindestens einen weiteren des mindestens einen Analyseknotens) der zweiten Ebene (130 zu verteilen, der dazu konfiguriert ist, die Ergebnisse und die mindestens eine Aktion ferner an mindestens einen weiteren des mindestens einen Analyseknotens der ersten Ebene (120) zu verteilen, der mit dem mindestens einen weiteren Analyseknoten der zweiten Ebene verbunden ist, so dass die mindestens eine Aktion zur Ausführung durch einen anderen Analyseknoten der ersten Ebene als denjenigen des mindestens einen Analyseknotens der ersten Ebene (120), der das Verkehrsprofil meldet, ausgelöst werden kann.

11. System nach einem der vorangegangenen Ansprüche, wobei die Verkehrsprofile aus dem Datenverkehr innerhalb des Datennetzwerks als Informationstupel bereitgestellt werden, wobei die Tupel Elemente in Form von Protokollkopfinformationen und/oder Daten umfassen, die in Metadaten adressierbar sind, und an dem mindestens einen Analyseknoten der ersten Ebene (120) auf übereinstimmende Regeln, insbesondere auf der Grundlage von Metadaten, überprüft werden.

12. Verfahren zum Sichern eines Datennetzwerks und von an das Datennetzwerk gekoppelten Endgerätevorrichtungen, wobei das Netzwerk eine Netzwerktopologie aus einer Mehrzahl von Netzwerkknoten umfasst, die miteinander verbunden sind, wobei das Verfahren mindestens die folgenden Schritte umfasst:
- Extrahieren von Verkehrsprofilen des passierenden Datenverkehrs innerhalb des Datennetzwerks direkt aus einer Leitung oder aus Spiegelungsports von Netzwerkdatenebenenknoten an mindestens einem Netzwerkrandknoten, Identifizieren jeglicher Merkmale der extrahierten Datenverkehrsprofilinformationen und Weiterleiten der jeweiligen Verkehrsprofile aus dem Datenverkehr innerhalb des Datennetzwerks an mindestens einen Analyseknoten der ersten Ebene, wobei die Verkehrsprofile als Informationstupel bereitgestellt werden, wobei die Informationstupel Elemente in Form von Protokollkopfinformationen und/oder Daten umfassen, die in Metadaten adressierbar sind;
- Empfangen der Verkehrsprofile des Datenverkehrs an dem mindestens einen Analyseknoten der ersten Ebene, Anwenden eines Lernalgorithmus auf die Verkehrsprofile, Ableiten mindestens eines gelernten Verkehrsprofils aus den Verkehrsprofilen, lokales Speichern des mindestens einen gelernten Verkehrsprofils und Weiterleiten mindestens eines Teils des mindestens einen gelernten Verkehrsprofils an mindestens einen Analyseknoten der zweiten Ebene;
- Überprüfen des mindestens einen gelernten Verkehrsprofils an dem mindestens einen Analyseknoten der ersten Ebene auf übereinstimmende Regeln, die von einer ersten logisch zentralisierten Einheit gespeichert und abrufbar sind, wobei die Regeln jeweils bestimmte Verkehrsprofile jeweiligen Aktionen zuweisen;
- Verteilen, durch die erste logisch zentralisierte Einheit, wenn der mindestens eine Analyseknoten der zweiten Ebene eines der bestimmten Verkehrsprofile von dem mindestens einen Analyseknoten der ersten Ebene empfängt, der jeweiligen Regeln an den mindestens einen Analyseknoten der zweiten Ebene, der die jeweiligen Regeln an den mindestens einen Analyseknoten der ersten Ebene weiterleitet, um die Ausführung mindestens einer Aktion auszulösen, die dem empfangenen der bestimmten Verkehrsprofile zugeordnet ist;
- Ausführen, ausgelöst durch den mindestens einen Analyseknoten der ersten Ebene, der mindestens einen ausgewählten Aktion.

13. Verfahren nach Anspruch 12, wobei die Anwendung des Lernalgorithmus auf dem Unterteilen der Verkehrsprofile aus dem Datenverkehr in verschiedene Klassen basiert, insbesondere entweder in legitimen Verkehr oder in verdächtigen Verkehr.

14. Verfahren nach Anspruch 12 oder 13, wobei die ausgeführte mindestens eine Aktion und die mit der mindestens einen Aktion verbundenen Ergebnisse von dem mindestens einen Analyseknoten der zweiten Ebene an die erste logisch zentralisierte Einheit zum Speichern und an mindestens einen anderen als denjenigen des mindestens einen Analyseknotens der ersten Ebene, der das Verkehrsprofil meldet, weitergeleitet werden, um eine lokale Ausführung auszulösen.

15. Verfahren nach Anspruch 12, 13 oder 14, wobei der mindestens eine Analyseknoten der zweiten Ebene die Ausführung der mindestens einen ausgewählten Aktion an mindestens einem Teil des mindestens einen Netzwerkrandknotens stoppt.

16. Verfahren nach einem der Ansprüche 12 bis 15, wobei die erste logisch zentralisierte Einheit die ausgeführte mindestens eine Aktion und die mit der mindestens einen Aktion verbundenen Ergebnisse an mindestens einen anderen als denjenigen des mindestens einen Analyseknotens der zweiten Ebene, der die ausgeführte mindestens eine Aktion und die damit verbundenen Ergebnisse meldet, zur potentiellen Weiterleitung an weitere Analyseknoten der ersten Ebene, die mit dem mindestens einen anderen Analyseknoten der zweiten Ebene verbunden sind, weiterleitet.

## Revendications

1. Système de sécurité pour un réseau de données et des dispositifs de terminal reliés au réseau de données, le réseau comprenant une topologie de réseau d'une pluralité de nœuds de réseau interconnectés, le système de sécurité étant construit hiérarchiquement et implémenté dans le réseau de données et comprenant au moins les éléments suivants :
- au moins un nœud de périphérie de réseau (110) du réseau de données, configuré pour extraire des informations de profil de trafic de données provenant du trafic de données passantes dans le réseau de données, directement d'un câble ou des ports mis en miroir des nœuds de plan de données du réseau, pour identifier toutes les caractéristiques des informations de profil de trafic de données extraites, pour générer des profils de trafic issus du trafic de données dans le réseau de données et pour acheminer les profils de trafic générés à au moins un nœud d'analyse de premier niveau (120), les profils de trafic étant fournis sous la forme de tuples d'information, les tuples d'information comprenant des éléments en termes d'informations et/ou de données d'en-tête de protocole qui sont adressables dans les métadonnées ;
- l'au moins un nœud d'analyse de premier niveau (120) étant connecté à l'au moins un nœud de périphérie de réseau (110) et configuré pour recevoir les profils de trafic du trafic de données, pour appliquer un algorithme d'apprentissage aux profils de trafic, pour stocker localement les profils de trafic appris et pour transmettre au moins certains des profils appris qui sont devenus fermement établis à au moins un nœud d'analyse de second niveau (130),
- l'au moins un nœud d'analyse de second niveau (130) étant connecté à l'au moins un nœud d'analyse de premier niveau (120) et à l'au moins une première entité logiquement centralisée (140) et configuré pour recevoir les profils appris de l'au moins un nœud d'analyse de premier niveau (120) ;
- ladite au moins une première entité logiquement centralisée (140) configurée pour stocker les règles qui attribuent certains profils de trafic aux actions respectives individuellement et pour distribuer, lorsque l'au moins un nœud d'analyse de second niveau (130) reçoit un des certains profils de trafic de l'au moins un nœud d'analyse de premier niveau, les règles respectives à l'au moins un nœud d'analyse de second niveau (130) configuré pour acheminer les règles respectives à l'au moins un nœud d'analyse de premier niveau (120) pour déclencher l'exécution d'au moins une action attribuée au profil reçu des certains profils de trafic.

2. Système selon la revendication 1, dans lequel l'au moins un nœud d'analyse de second niveau (130) est en outre configuré pour générer des profils de trafic agrégés sur la base des profils appris reçus.

3. Système selon la revendication 1 ou 2, dans lequel le réseau de données est un réseau mobile.

4. Système selon la revendication 3, dans lequel l'au moins un nœud de périphérie de réseau est un nœud de plan de données du groupe de nœuds comprenant un PGW, un nœud d'ancrage IP mobile, un point d'extrémité de tunnel PPP, un point d'extrémité de tunnel GTP.

5. Système selon les revendications 1 à 4, dans lequel le réseau de données comprend en outre au moins une seconde entité logiquement centralisée (160) connectée à l'au moins une première entité logiquement centralisée (140) et configurée pour stocker les métadonnées fournies par un tiers, particulièrement par un client ou par un opérateur du réseau de données, les métadonnées étant prises en compte lors de l'application des règles respectives.

6. Système selon l'une quelconque des revendications précédentes comprenant en outre au moins un portail de publication (150) connecté à l'au moins une première entité logiquement centralisée (140) et configuré pour publier l'au moins une action qui a été filtrée et acheminée par l'au moins une première entité logiquement centralisée (140).

7. Système selon l'une quelconque des revendications précédentes, dans lequel l'au moins un nœud de périphérie de réseau (110), l'au moins un nœud d'analyse de premier niveau (120) et/ou l'au moins un nœud d'analyse de second niveau (130) est/sont placé(s) à un point d'appairage dans le réseau de données, au niveau d'un routeur de transition dans le réseau de données ou au niveau de n'importe quelle liaison dans le réseau de données, directement dans un chemin de données ou de façon connectée à une sonde qui extrait des informations de profil de trafic directement d'un câble ou d'au moins un port mis en miroir des nœuds de plan de données du réseau de données.

8. Système selon l'une quelconque des revendications précédentes, le système étant configuré pour être étendu de manière itérative par rapport au nombre de nœuds d'analyse de premier niveau (120), au nombre de nœuds d'analyse de second niveau (130) et/ou à un nombre de couches de nœuds d'analyse supplémentaires.

9. Système selon l'une quelconque des revendications précédentes, dans lequel l'au moins un nœud d'analyse de second niveau (130) est en outre configuré pour vérifier la pertinence concernant le(s) nœud(s) d'analyse de premier niveau des profils reçus et pour transmettre les profils respectifs aux nœuds d'analyse de premier niveau pertinents respectifs dudit au moins un nœud d'analyse de premier niveau (120) et à la première entité logiquement centralisée (140).

10. Système selon l'une quelconque des revendications précédentes, dans lequel ladite au moins une première entité centralisée (140) est en outre configurée pour stocker les résultats de ladite au moins une action et pour distribuer lesdits résultats et ladite au moins une action à l'au moins un autre dudit au moins un nœud d'analyse de second niveau (130) configuré pour distribuer en outre lesdits résultats et ladite au moins une action à l'au moins un autre dudit au moins un nœud d'analyse de premier niveau (120) associé à l'au moins un autre nœud d'analyse de second niveau de sorte que ladite au moins une action puisse être déclenchée pour exécution par un nœud d'analyse de premier niveau autre que celui dudit au moins un nœud d'analyse de premier niveau (120) rapportant le profil de trafic.

11. Système selon l'une quelconque des revendications précédentes, dans lequel les profils de trafic provenant du trafic de données dans le réseau de données sont fournis sous la forme de tuples d'information, les tuples comprenant des éléments en termes d'informations et/ou de données d'en-tête de protocole adressables dans les métadonnées, et sont vérifiés au niveau de l'au moins un nœud d'analyse de premier niveau (120) quant aux règles de correspondance, particulièrement sur la base des métadonnées.

12. Procédé destiné à sécuriser un réseau de données et des dispositifs de terminal reliés au réseau de données, le réseau comprenant une topologie de réseau d'une pluralité de nœuds de réseau interconnectés, le procédé comprenant au moins les étapes suivantes :
- l'extraction, au niveau d'au moins un nœud de périphérie de réseau, de profils de trafic du trafic de données passantes dans le réseau de données, directement d'un câble ou de ports mis en miroir des nœuds de plan de données de réseau, l'identification de toutes les caractéristiques des informations de profil de trafic de données extraites et l'acheminement des profils de trafic respectifs provenant du trafic de données dans le réseau de données à l'au moins un nœud d'analyse de premier niveau, les profils de trafic étant fournis sous la forme de tuples d'information, les tuples d'information comprenant des éléments en termes d'informations et/ou données d'en-tête de protocole adressables dans les métadonnées ;
- la réception, au niveau d'au moins un nœud d'analyse de premier niveau, des profils de trafic du trafic de données, l'application d'un algorithme d'apprentissage aux profils de trafic, la dérivation des profils de trafic d'au moins un profil de trafic appris, le stockage local de l'au moins un profil de trafic appris et la transmission d'au moins certains de l'au moins un profil de trafic appris à au moins un nœud d'analyse de second niveau ;
- la vérification, au niveau de l'au moins un nœud d'analyse de premier niveau, des règles de correspondance de l'au moins un profil de trafic appris qui sont stockées et récupérables d'une première entité logiquement centralisée, les règles attribuant certains profils de trafic aux actions respectives individuellement ;
- la distribution par la première entité logiquement centralisée, lorsque l'au moins un nœud d'analyse de second niveau reçoit un des certains profils de trafic provenant de l'au moins un nœud d'analyse de premier niveau, des règles respectives à l'au moins un nœud d'analyse de second niveau qui achemine les règles respectives à l'au moins un nœud d'analyse de premier niveau pour déclencher l'exécution d'au moins une action attribuée au profil reçu des certains profils de trafic ;
- l'exécution de l'au moins une action sélectionnée, déclenchée par l'au moins un nœud d'analyse de premier niveau.

13. Procédé selon la revendication 12, dans lequel l'application de l'algorithme d'apprentissage est basée sur la classification des profils de trafic provenant du trafic de données en différentes classes, particulièrement en trafic légitime ou en trafic suspect.

14. Procédé selon la revendication 12 ou 13, dans lequel ladite au moins une action exécutée et les résultats associés à ladite au moins une action sont transmis par l'au moins un nœud d'analyse de second niveau à la première entité logiquement centralisée aux fins du stockage et à au moins une autre que celle dudit au moins un nœud d'analyse de premier niveau rapportant le profil de trafic afin de déclencher une exécution locale.

15. Procédé selon la revendication 12, 13 ou 14, dans lequel l'au moins un nœud d'analyse de second niveau arrête l'exécution de ladite au moins une action sélectionnée au moins au niveau de certains de l'au moins un nœud de périphérie de réseau.

16. Procédé selon l'une quelconque des revendications 12 à 15, dans lequel la première entité logiquement centralisée transmet ladite au moins une action exécutée et les résultats associés à ladite au moins une action à au moins une autre que celle de l'au moins un nœud d'analyse de second niveau rapportant ladite au moins une action exécutée et les résultats associés à celle-ci, pour une éventuelle transmission à des nœuds d'analyse de premier niveau supplémentaires associés à l'au moins un autre nœud d'analyse de second niveau.
